# EUROPÄISCHE PATENTANMELDUNG

(11) **EP 3 020 534 A1**
(43) Veröffentlichungstag der Anmeldung: **18.05.2016**
(21) Anmeldenummer: 14192919.0
(22) Anmeldetag: 12.11.2014
(51) Int. Cl.: B29C 67/00

(54) **Verfahren und Vorrichtung zur Herstellung einer dreidimensionalen Struktur**

(71) Anmelder: Picnic Gourmondo AG, 8001 Zürich (CH)
(72) Erfinder: Magnano, Carlo, 8824 Schönenberg (CH)
(74) Vertreter: Rutz & Partner

(57) **Zusammenfassung**

Das Verfahren und die Vorrichtung dienen der Herstellung einer dreidimensionalen Struktur (9). Dazu werden pflanzliches Mehl, wie Getreidemehl, und Wasser bereitgestellt und gemischt, um ein Prozessmaterial (9) herzustellen, welches in einem oder mehreren Verfahrensschritten, vorzugsweise entsprechend einer Vorlage, zu einer Vorform (90) geformt wird. Erfindungsgemäss wird die Vorform (90) auf eine Verkohlungstemperatur von wenigstens 325°C erwärmt und während einer Prozessdauer thermisch so lange behandelt, bis eine Verkohlung des Prozessmaterials (9) der Vorform (90) und somit die Struktur (9) resultiert.

## Beschreibung

Die Erfindung betrifft ein Verfahren und eine Vorrichtung zur Fertigung von dreidimensionalen Strukturen sowie eine nach diesem Verfahren hergestellte dreidimensionale Struktur.

In den letzten Jahren sind Verfahren und Vorrichtungen entwickelt worden, mittels denen Gegenstände, wie Skulpturen, Werkzeugteile oder medizinische Komponenten, insbesondere für Testzwecke rasch herstellbar sind.

Aus der US5587913A ist eine sogenannte Rapid Prototyping Vorrichtung bekannt, mittels der die Oberflächenstruktur oder Schale eines Objekts ausgehend von einer CAD-Spezifikation innerhalb kurzer Zeit erstellt werden kann. Gemäss dem offengelegten Verfahren werden Planungsphasen und Aufbauphasen alternierend durchgeführt, sodass ein schichtweiser Aufbau des Objekts erfolgt.

Die EP2072223A1 offenbart ein Verfahren zur Herstellung eines dreidimensionalen Objekts aus verschiedenen Materialien und mit verschiedenartigen Strukturen mittels Rapid Prototyping / Rapid Manufacturing. Dabei wird das Objekt aus einem ersten Rohmaterial und mit einer ersten Struktur schichtweise aufgebaut, wobei Rohmaterial an bestimmten Stellen innerhalb einer Schicht zur Aushärtung gebracht wird, wie dies in einem Datensatz festgelegt ist.

Die DE10025804A1 offenbart ein Verfahren zur Herstellung von dreidimensionalen biokompatiblen Strukturen, die in der Medizin Verwendung finden.

Die WO2012/045660A1 offenbart eine Vorrichtung und ein Harz die für die Durchführung eines Rapid Prototyping Verfahrens geeignet sind. Es wird darauf hingewiesen, dass bei schnell härtenden Polymeren auf Acrylbasis, die zuvor für diese Verfahren verwendet wurden, eine Versprödung und ein Schrumpfen festgestellt wurden.

Die DE202005020596U1 offenbart ein Pulver für die Verwendung bei der Herstellung von räumlichen Strukturen bzw. Formkörpern mittels eines schichtaufbauenden Verfahrens, nämlich eines pulverbasierten generativen Rapid Prototyping Verfahrens. Genannt werden insbesondere das SLS-Verfahren (selektives Laser-Sintern) oder die Laserschmelztechnologie. Dazu werden Pulver bereitgestellt, die auf einem Polyetheretherketon-Kunststoff basieren.

Zur Schaffung von Skulpturen und Gegenständen werden oft auch Giessverfahren angewendet, zum Beispiel durch Giessen in verlorene Formen oder Giessen in Dauerformen. Auch für diese Verfahren wird oft Kunststoff als Gussmasse verwendet.

Während Kunststoffe für die beschriebenen Verfahren gute Ergebnisse liefern, bestehen nach wie vor Nachteile. Insbesondere sind die Kunststoffe relativ aufwendig in der Herstellung und mit entsprechend hohen Kosten verbunden. Weiterhin ist die Verarbeitung der Kunststoffe bzw. die Herstellung der räumlichen Strukturen und von Körper ebenfalls mit entsprechend hohem Aufwand verbunden. Ferner ist die Beständigkeit der resultierenden Kunststoffprodukte oft ungenügend. Zudem ist die Nachbearbeitung von Kunststoffprodukten, insbesondere die weitere Formgebung und Beschichtung üblicherweise mit hohem Aufwand verbunden. Besonders nachteilig ist ferner die schwierige Entsorgung der Kunststoffprodukte, die nicht durch biologische Abbauprozesse "zurückgenommen" werden können.

Der vorliegenden Erfindung liegt daher die Aufgabe zugrunde, ein verbessertes Verfahren und eine verbesserte Vorrichtung zur Herstellung dreidimensionaler Strukturen zu schaffen. Weiterhin ist eine gemäss diesem Verfahren hergestellte verbesserte dreidimensionale Struktur zu schaffen, die vorteilhafte Eigenschaften aufweist.

Insbesondere soll die gefertigte Struktur vorteilhafte physikalische, chemische und ästhetische Eigenschaften aufweisen. Die Struktur soll einen natürlichen Eindruck hinterlassen und an natürliche Gegenstände erinnern. Weiterhin soll die Struktur eine hohe Festigkeit aufweisen, sodass die Struktur als Nutzgegenstand verwendbar ist. Weiterhin soll die Struktur weitgehend resistent gegen äussere Einflüsse und somit witterungsbeständig sein. Ferner soll die Struktur mit geringem Aufwand wieder abgebaut oder rezykliert werden können.

Das Verfahren soll mit geringem Aufwand, kostengünstigen Ausgangsmaterialien und einer einfachen Vorrichtung durchführbar sein.

Ferner sollen mittels des Verfahrens und der Vorrichtung Rapid Prototyping Prozesse und Rapid Manufacturing Prozesse vorteilhaft implementierbar sein.

Diese Aufgabe wird mit einem Verfahren, einer Vorrichtung und einer Struktur gelöst, welche die in Anspruch 1, 11 bzw. 14 angegebenen Merkmale aufweisen. Vorteilhafte Ausgestaltungen der Erfindung sind in weiteren Ansprüchen angegeben.

Das Verfahren und die Vorrichtung dienen der Herstellung einer dreidimensionalen Struktur. Dazu werden pflanzliches Mehl, wie Getreidemehl, und Wasser bereitgestellt und gemischt, um ein Prozessmaterial herzustellen, welches in einem oder mehreren Verfahrensschritten, vorzugsweise entsprechend einer Vorlage, zu einer Vorform geformt wird.

Erfindungsgemäss wird die Vorform auf eine Verkohlungstemperatur von wenigstens 325°C erwärmt und während einer Prozessdauer thermisch so lange behandelt, bis eine vorzugsweise vollständige Verkohlung des Prozessmaterials der Vorform und somit die Struktur resultiert. Die Verkohlungstemperatur wird entsprechend der Zusammensetzung des Prozessmaterials und/oder entsprechend der Grösse der Vorform und/oder der gewünschten Prozessdauer, innerhalb der die Vorform in den verkohlten Zustand überführt wird.

Das zu verarbeitende Prozessmaterial wird erfindungsgemäss mittels kostengünstiger Ausgangsmaterialien geschaffen. Als Mehl kann Getreidemehl oder ein pflanzliches Mehl mit vergleichbaren Eigenschaften verwendet werden.

Die Konsistenz des Prozessmaterials bzw. die Wahl der Grösse der Mischungsanteile wird entsprechend dem Formungsprozess gewählt. Je nach Formungsprozess wird eine höhere oder geringere Viskosität bzw. eine geringere oder höhere Fluidität vorgesehen.

Sofern das Prozessmaterial durch Prägung verformt wird, bildet das Prozessmaterial bzw. die zu verarbeitende Biomasse vorzugsweise eine zähflüssige Masse oder einen Teig mit hoher Viskosität. Der Mehlanteil wird daher entsprechend hoch gewählt. Beispielsweise wird das Verhältnis von Mehl zu Wasser im Bereich von 10:1 bis 10:2 gewählt.

Sofern das Prozessmaterial anhand eines Giessverfahrens in eine verlorene Form oder in eine Dauerform eingefügt wird, wird ein Prozessmaterial mit reduzierter Viskosität und mit einem reduzierten Mehlanteil verwendet. Beispielsweise wird das Verhältnis von Mehl zu Wasser im Bereich von 10:3 bis 10:4 gewählt.

Sofern das Prozessmaterial zur Bildung der Struktur gemäss einem Rapid Prototyping Verfahren schichtweise aufgetragen wird, so wird vorzugsweise ein Prozessmaterial mit geringer Viskosität und reduziertem Mehlanteil verwendet. Beispielsweise wird ein flüssiger Teig verwendet. Die Viskosität dieser Teigflüssigkeit wird entsprechend der gewünschten Feinheit R dreidimensionalen Struktur bzw. entsprechend der Auflösung der vom CAD-System gelieferten Datensätze gewählt. Ferner wird eine entsprechend feine Auftragsdüse gewählt, welches erlaubt die Informationen des CAD-Systems in der Struktur umzusetzen.

Damit unmittelbar nach Auftrag der Schichten eine Verfestigung des Prozessmaterials auftritt, wird die aufgetragene Schicht mittels einer Laservorrichtung mit einem Laserstrahl oder mittels einer Heizvorrichtung mit einer Verfestigungstemperatur beaufschlagt bzw. auf eine Verfestigungstemperatur erwärmt, die vorzugsweise im Bereich von 80°C - 200°C liegt. Durch Verdampfung des im Prozessmaterial enthaltenen Wassers erfolgt eine rasche Verfestigung der aufgetragenen Schichten, sodass die Vorform in kurzer Zeit gefertigt werden kann.

Erfindungsgemäss kann die Vorform nach beliebigen Verfahren gefertigt werden. Ebenso können beliebige Vorformen erstellt werden. Dazu werden vorzugsweise Vorlagen verwendet, die gegebenenfalls in der Rapid Prototyping Vorrichtung in Form von Datensätzen eines CAD-Programms abgelegt sind. In diesem Fall kann der Designer oder Ingenieur eine Struktur auf seinem CAD-System erstellen und die entsprechenden Datensätze an die Rapid Prototyping Vorrichtung senden, welche in der Folge die Vorform erstellt.

Das erfindungsgemässe Verfahren kann somit in einfachen Werkstätten zur kostengünstigen Herstellung einfacher Strukturen oder in Industriebetrieben zur kostengünstigen Herstellung von komplexen Strukturen verwendet werden.

Mittels des erfindungsgemässen Verfahrens können Kunstgegenstände, wie Skulpturen und Schmuckgegenstände, oder Nutzgegenstände, wie Möbelstücke, Bauelemente, Werkzeuge, oder Teile davon hergestellt werden.

Durch die Verkohlung des Prozessmaterials resultieren stabile Strukturen, die vorteilhaft weiter bearbeitet werden können. Verkohlung tritt ein, sobald sich die organischen Stoffe des Prozessmaterials nach Erhitzen unter Sauerstoffmangel zersetzen. Dieser Prozess kann durch Wahl der Verkohlungstemperatur beschleunigt oder verzögert werden.

Die gefertigten Strukturen können mechanisch bearbeitet, zum Beispiel geschliffen, und dann beschichtet und/oder bemalt werden. Beispielsweise wird die gefertigte Struktur mit einer Kunststoffschicht oder einer Metallschicht versehen.

Unbeschichtete Strukturen haben hingegen den Vorteil, dass das Kohlematerial einen natürlichen Eindruck hinterlässt und für Skulpturen, Nutzgegenstände und Baumaterialien hervorragend geeignet ist. Beispielsweise können Bodenplatten und Wandplatten gefertigt werden.

Durch Beimischung von feuerbeständigen Farben und/oder Glas-Granulat oder Glasstaub zum Prozessmaterial können die Strukturen hinsichtlich des ästhetischen Erscheinungsbildes und hinsichtlich der Festigkeit und Oberflächenbeschaffenheit vorteilhaft weitergebildet werden. Sofern das Prozessmaterial mit Glaspartikeln versehen wurde, wird die Prozesstemperatur während oder nach der Verkohlung des Prozessmaterials auf die Schmelztemperatur von Glas erhöht, so dass sich das das geschmolzene Glas mit dem Kohlematerial verbinden kann.

Die gefertigten Strukturen sind robust und witterungsbeständig. Beispielsweise können Tragstrukturen für Stühle und Tische auf einfache Weise gefertigt werden.

Besonders vorteilhaft ist, dass die Entsorgung der Strukturen nach Gebrauch keinerlei Schwierigkeiten bereitet. Die Strukturen können zerkleinert und als Baumaterialien, zum Beispiel für den Strassenbau vorteilhaft weiter verwendet werden. Bei der Entsorgung der Materialien in der Natur erfolgt keine Belastung der Umwelt. Ferner kann das Material vorteilhaft als Brennstoff in Hochöfen verwendet werden.

Das Prozessmaterial kann durch Beimischung weiterer Komponenten modifiziert werden, um die Eigenschaften der resultierenden Kohlestruktur nach Wunsch zu verändern. Möglich ist auch der Einschluss von Substanzen, welche nach der Fertigung der Strukturen Duftstoffe freigeben. Das ästhetische Erscheinungsbild der Strukturen kann dadurch durch wohlriechende Duftstoffe ergänzt werden.

Unter Berücksichtigung des ausgewählten Verfahrens zur Herstellung der Vorform wird zur Bildung des Prozessmaterials Mehl und Wasser vorzugsweise im Verhältnis in einem Bereich von 10:1 bis 10:8, vorzugsweise in einem Bereich von 10:2 bis 10:4 gemischt. Das dadurch gebildete Prozessmaterial kann nach der Herstellung zwischengelagert und/oder thermisch vorbehandelt werden, bis die gewünschte Viskosität erreicht ist.

Durch Einschluss von Salz und/oder Zucker, gegebenenfalls Honigzucker, kann die Festigkeit der resultierenden Strukturen erhöht werden. Durch den Einschluss von Fett, insbesondere pflanzlichem oder tierischem Fett, kann einer Versprödung des Materials der gefertigten Strukturen entgegengewirkt werden.

Vorzugsweise wird dem aus Mehl und Wasser bestehenden Prozessmaterial ein Anteil von 1% - 10% Salz und/oder ein Anteil von 1% - 10% Zucker, gegebenenfalls Honigzucker, und/oder ein Anteil von 1% - 5% Fett zugemischt.

Nach der Bereitstellung der Vorform wird diese z.B. in einem Ofen mit einer Verkohlungstemperatur beaufschlagt, die im Bereich von 325°C - 675°C, vorzugsweise zwischen 475°C und 525°C liegt.

Die Verkohlungsdauer wird vorzugsweise in Abhängigkeit von der gewählten Verkohlungstemperatur gewählt und liegt typischerweise im Bereich zwischen 1 min - 15 min, vorzugsweise zwischen 2 min - 5 min.

Ausgehend von den obigen Angaben wird der Fachmann die resultierenden dreidimensionalen Strukturen prüfen und die Prozessparameter nach seinen Wünschen optimieren.

Nachfolgend wird die Erfindung anhand von Zeichnungen näher erläutert. Dabei zeigt:
- Fig. 1: ein aus Mehl und Wasser gefertigtes Prozessmaterial 9, welches zu einer Vorform 90 verarbeitet wird sowie die fertig gestellte Vorform 90, in die Einprägungen 91, 92, 93, 94 und 95 eingearbeitet wurden;
- Fig. 2: die Vorform 90 von Fig. 1 vor der Bearbeitung in einer Heizvorrichtung bzw. einem Ofen 2, in dem eine Verkohlungstemperatur von 490°C eingestellt wurde, und die gefertigte dreidimensionale Struktur 900, die nach der Verkohlung der Vorform 90 resultiert;
- Fig. 3: die Heizvorrichtung 2 von Fig. 2, in der eine Rapid Prototyping Vorrichtung 1 angeordnet ist, mittels der eine Vorform 90 bei einer Verfestigungstemperatur von 95°C schichtweise aufgebaut wird, sowie dieselbe oder eine weitere Heizvorrichtung 2', mittels der die Vorform bei einer Verkohlungstemperatur von 490°C verkohlt und in die gewünschte Struktur 900 gewandelt wird; und
- Fig. 4: eine erfindungsgemässe Vorrichtung zur Durchführung des Verfahrens mit einer Rapid Prototyping Vorrichtung 1 und der schematisch gezeigten Heizvorrichtung 2 von Fig. 3.

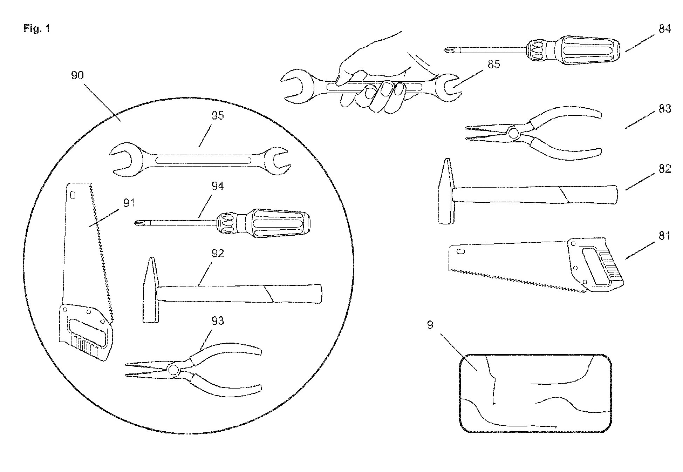

Fig. 1 zeigt ein aus Mehl und Wasser gefertigtes Prozessmaterial 9, welches in der Form einer quaderförmigen Biomasse vorliegt. Ferner ist eine aus diesem Prozessmaterial 9 gefertigte Vorform 90 gezeigt. Das Prozessmaterial 9 wurde zu einer runden und relativ dicken Scheibe von einem Durchmesser von z.B. 35 cm und einer Höhe von z.B. 3.5 cm umgeformt. In diese Rundform wurden in der Folge die gezeigten Werkzeuge, die Säge 81, der Hammer 82, die Zange 83, der Schraubendreher 84 und der Schraubenschlüssel 85 eingepresst, wodurch die dazu korrespondierenden Einprägungen 90, 91, 92, 93, 94, 95 resultierten. Das Prozessmaterial 9 weist in diesem Fall eine hohe Viskosität auf, sodass die Konturen der eingeprägten Werkzeuge nicht verlaufen und ihre Kanten behalten.

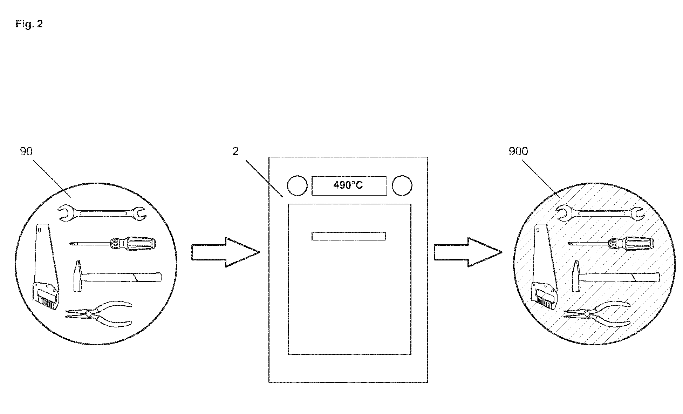

Fig. 2 zeigt die Vorform 90 von Fig. 1 vor der Bearbeitung in einer Heizvorrichtung bzw. einem Ofen 2, in dem eine Verkohlungstemperatur von 490°C eingestellt wurde. Ferner ist die nach der Verkohlung der Vorform 90 resultierende dreidimensionale Struktur 900 gezeigt. Beispielsweise wurde die Vorform 90 innerhalb der Heizvorrichtung bzw. innerhalb des Ofens 2 während 2 bis 3 Minuten der Verkohlungstemperatur von 490°C ausgesetzt.

Die gefertigte Struktur 900 kann nun mechanisch oder chemisch bearbeitet und/oder beschichtet werden. Beispielsweise wird die Struktur 900 geschliffen und beschichtet oder bemalt. Die Beschichtung kann beispielsweise in einer Sputterdepositionsanlage oder durch einfaches Sprayen erfolgen.

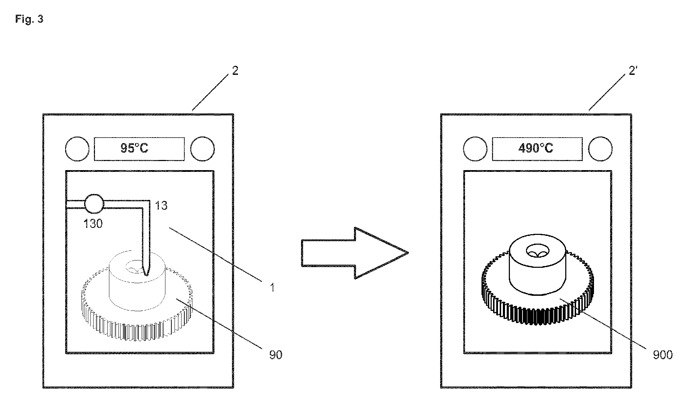

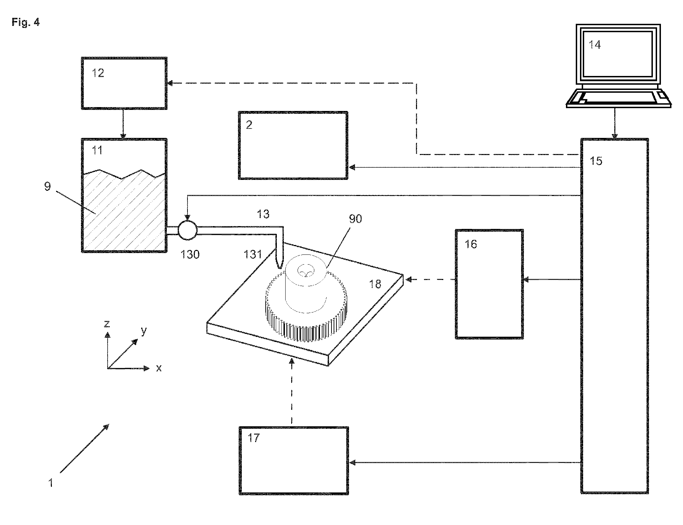

Fig. 3 zeigt die Heizvorrichtung 2 von Fig. 2, in der eine Rapid Prototyping Vorrichtung 1 angeordnet ist, die nachstehend mit Bezug auf Fig. 4 näher beschrieben wird.

Mittels der Rapid Prototyping Vorrichtung 1 wird eine Vorform 90 in der Ausgestaltung eines Zahnrads bei einer Verfestigungstemperatur von 95°C schichtweise aufgebaut. Die Verfestigungstemperatur ist derart gewählt, dass sich das aufgetragene Prozessmaterial 9 unverzüglich verfestigt, sodass ein Verfliessen der Konturen und eine Deformation der Vorform 90 verhindert wird.

Nach dem vollständigen Aufbau und der Verfestigung der Vorform 90 wird diese der Verkohlungstemperatur ausgesetzt. Beispielsweise wird die Temperatur in der Heizvorrichtung 2 von der Verfestigungstemperatur auf die Verkohlungstemperatur von z.B. 490°C erhöht, wonach das Material der Vorform z.B. innerhalb von 2 bis 3 Minuten verkohlt.

Nach der Verfestigung der Vorform 90 kann diese jedoch auch aus der Heizvorrichtung Ziffer 2 entnommen und in eine weitere Heizvorrichtung 2' eingelegt werden, in der die Verkohlung erfolgt.

Grundsätzlich können die beschriebenen Prozessschritte auch auf einem Fliessband erfolgen, welches eine erste Heizzone mit der Verfestigungstemperatur und eine zweite Heizzone mit der Verkohlungstemperatur aufweist.

Die fertig gestellte Struktur 900 kann wiederum weiter bearbeitet, z.B. beschichtet oder bemalt werden.

Exemplarisch wurde eine Vorform 90 in der Ausgestaltung eines Zahnrads gewählt, die zeigt, dass mittels des erfindungsgemässen Verfahrens nicht nur Kunstgegenstände, sondern auch technische Nutzgegenstände hergestellt werden können, die zumindest den Zweck eines Prototypen erfüllen.

Fig. 4 zeigt eine erfindungsgemässe Vorrichtung zur Durchführung des Verfahrens mit einer Rapid Prototyping Vorrichtung 1 und der schematisch gezeigten Heizvorrichtung 2 von Fig. 3.

Die Vorrichtung von Fig. 4 basiert auf der eingangs beschriebenen Rapid Prototyping Vorrichtung, die aus der US5587913A bekannt ist. Diese Vorrichtung umfasst einen Behälter 11, in den das Prozessmaterial 9 eingefüllt wird und aus dem das Prozessmaterial 9 unter Druck durch eine steuerbares Ventil 130 und eine Ausgangsleitung 13 in den Arbeitsbereich geführt werden kann, in dem die Vorform 90 erstellt wird. In diesem Bereich ist ein Substrat 18 vorgesehen auf dem die Vorform 90 schichtweise aufgebaut wird.

Zähflüssiges Prozessmaterial 9 wird vorzugsweise mittels einer Kolbenpumpe 12 aus dem Behälter 11 gepresst, wobei beispielsweise mit jedem Kolbenhub eine Schicht auf die Vorform 90 aufgetragen wird. Die Kolbenpumpe 12 ist vorzugsweise steuerbar und dazu mit einer Steuereinheit 15 verbunden. In der Folge können die Kolbenpumpe 12 und der steuerbare Ventil 130 parallel gesteuert werden. Alternativ kann das steuerbare Ventil 130 nur zu Beginn und am Ende des Fertigungsprozesses geöffnet und verschlossen werden, während der Ausstoss des Prozessmaterials 9 mittels der Kolbenpumpe 12 gesteuert wird.

Sofern im Behälter 11 flüssiges Prozessmaterial 9 bzw. ein flüssiger Teig vorgesehen ist, kann dieser auch unter Druck seines Eigengewichts durch die Leitung 13 fliessen. Zusätzlich kann der Behälter 11 beispielsweise mit Druckluft unter Druck gesetzt werden. In der Folge entweicht das flüssige Prozessmaterials 9 mit hohem Durchfluss durch die Leitung 13.

Das Substrat 18 kann Teil der Vorform 90 und der späteren dreidimensionalen Struktur 900 bilden und sich mit den aufgetragenen Schichten des Prozessmaterials 9 verbinden. Das Substrat 18 kann beispielsweise den Sockel der dreidimensionalen Struktur bilden.

Alternativ kann das Substrat auch 18 lediglich die Arbeitsoberfläche für die Bildung der Vorform 90 zur Verfügung stellen. In diesem Fall wird vorzugsweise ein Substrat 18 gewählt, welches sich nicht mit dem Prozessmaterial 9 verbindet. Beispielsweise wird ein Substrat aus Edelmetall, Stein oder Keramik verwendet. Die Schichten werden aufgebaut, indem das Substrat 18 entsprechend einer Vorlage durch Aktuatoren 16, 17 in X, Y und Z-Richtung verschoben wird, während das Prozessmaterial 9 gesteuert durch das Austrittsventil 130 durch die Leitung 13 strömt.

Alternativ oder zusätzlich zur Steuerung des Substrats 18 kann ferner die Leitung 13 bzw. deren Austrittsdüse 131 mittels der Aktuatoren 16, 17 im Raum geführt werden, um die Vorform 90 zu erstellen. Ferner sind Kombinationen möglich. Beispielsweise wird das Substrat 18 mittels des Aktuators 17 in der Höhe bzw. in z-Richtung verstellt, während die Austrittsdüse 131 mittels der Aktivatoren 16 in einer Ebene senkrecht dazu bzw. in x- und y-Richtung gefahren wird. Durch Steuerung der Austrittsdüse 130 und/oder der Pumpe oder des Druckerzeugers 12 kann der Fluss des Prozessmaterials 9 unterbrochen werden, so dass dieses nur an den vorgesehenen Stellen des Substrats 18 bzw. der bereits aufgetragenen Schichten aufgetragen wird.

Erfindungsgemäss ist die bereits in Fig. 3 exemplarisch gezeigte Heizvorrichtung 2 vorgesehen, die nun aktiviert wird, sodass die aufgetragenen Schichten der gewählten Verfestigungstemperatur ausgesetzt werden bzw. auf die Verfestigungstemperatur erwärmt werden.

In vorteilhaften Ausgestaltungen wird die Heizvorrichtung 2 oder ein ergänzendes Heizelement direkt an der Austrittsdüse 131 der Leitung 13 vorgesehen. Die Verfestigung kann dadurch unmittelbar nach dem Austritt aus der Leitung 13 erfolgen.

Die Heizvorrichtung 2 kann besonders vorteilhaft auch in der Form einer Mikrowellenquelle oder eines Mikrowellenofens realisiert werden. Die in das Feld der Mikrowelle hinein ragenden Vorrichtungsteile, insbesondere die Leitung 13, werden in der Folge vorzugsweise aus Kunststoff gefertigt. Nach dem Austritt aus der Leitung 13 erfolgt unter Einwirkung der Mikrowellenenergie rasch eine Trocknung und Verfestigung des Prozessmaterials 9, sodass der Auftrag der Schichten besonders rasch vollzogen werden kann. Die Heizvorrichtung kann vorteilhaft auch eine Mikrowellenquelle und eine Heizquelle in Kombination umfassen.

Die Heizvorrichtung kann zudem eine Belüftungsvorrichtung umfassen, die trockene Luft zuführt und feuchte Luft abtransportiert, sodass der Verfestigungsprozess noch schneller ablaufen kann.

Die Steuerung der Aktuatoren 16, 17, des Austrittsventils 130, der Kolbenpumpe 12 und der Heizvorrichtung 2 erfolgt durch eine Steuereinheit 15, der von einem CAD System 14 die Prozessdaten bzw. die geometrischen Daten der Vorform 90 zugeführt werden.

Wie dies mit Bezug auf Fig. 3 beschrieben wurde, kann die verfestigte Vorform 90 in der Folge durch die Heizvorrichtung 2 der Verkohlungstemperatur ausgesetzt werden oder beispielsweise mittels Förderbandes in einen Heizbereich transportiert werden innerhalb dessen die Verkohlungstemperatur vorherrscht.

## Patentansprüche

1. Verfahren zur Herstellung einer dreidimensionalen Struktur (9) umfassend die Bereitstellung und Mischung von pflanzlichem Mehl, wie Getreidemehl, und Wasser zur Herstellung eines Prozessmaterials (9), welches in einem oder mehreren Verfahrensschritten, vorzugsweise entsprechend einer Vorlage, zu einer Vorform (90) geformt wird, **dadurch gekennzeichnet, dass** die Vorform (90) auf eine Verkohlungstemperatur von wenigstens 325°C erwärmt und während einer Prozessdauer thermisch so lange behandelt wird, bis eine Verkohlung des Prozessmaterials (9) der Vorform (90) und somit die Struktur (9) resultiert.

2. Verfahren nach Anspruch 1, **dadurch gekennzeichnet, dass** die Verkohlungstemperatur im Bereich zwischen 325°C und 675°C, vorzugsweise zwischen 475°C und 525°C liegt.

3. Verfahren nach Anspruch 1 oder 2, **dadurch gekennzeichnet, dass** die Verkohlungsdauer, die vorzugsweise in Abhängigkeit der eingestellten Verkohlungstemperatur gewählt wird, im Bereich zwischen 1 min - 15 min, vorzugsweise zwischen 2 min - 5 min liegt.

4. Verfahren nach Anspruch 1, 2 oder 3, **dadurch gekennzeichnet, dass** zur Bildung des Prozessmaterials Mehl und Wasser im Verhältnis in einem Bereich von 10:1 bis 10:8, vorzugsweise in einem Bereich von 10:2 bis 10:4 gemischt werden.

5. Verfahren nach einem der Ansprüche 1-4, **dadurch gekennzeichnet, dass** dem Prozessmaterial (9) zusätzlich Salz und/oder Zucker und/oder Honig und/oder vorzugsweise pflanzliches oder tierisches Fett zugefügt wird.

6. Verfahren nach einem der Ansprüche 1-5, **dadurch gekennzeichnet, dass** dem aus Mehl und Wasser bestehenden Prozessmaterial (9) ein Anteil von 1% - 10% Salz und/oder ein Anteil von 1% - 10% Zucker, gegebenenfalls Honigzucker, und/oder ein Anteil von 1% - 5% Fett zugemischt wird.

7. Verfahren nach einem der Ansprüche 1-6, **dadurch gekennzeichnet, dass** dem Prozessmaterial (9) feuerfeste Farben zugefügt werden und/oder dass dem Prozessmaterial (9) ein Glas-Granulat oder Glasstaub zugemischt wird und die Prozesstemperatur während oder nach der Verkohlung des Prozessmaterials (9) auf die Schmelztemperatur von Glas erhöht wird.

8. Verfahren nach Anspruch 7, **dadurch gekennzeichnet, dass** die Vorform (90) durch Giessen des Prozessmaterials (9) in eine verlorene Form oder in eine Dauerform hergestellt wird oder dass die Vorform (90) mittels eines Rapid Prototyping Verfahrens gefertigt wird.

9. Verfahren nach Anspruch 8, **dadurch gekennzeichnet, dass** das Prozessmaterial (9) in einem Vorprozess aus einem Behälter (11) gepresst und schichtweise auf ein Substrat (18) aufgetragen und thermisch behandelt wird, sodass eine Verfestigung des Prozessmaterials (9), aber noch keine Verkohlung eintritt.

10. Verfahren nach Anspruch 9, **dadurch gekennzeichnet, dass** die durch das Prozessmaterial (9) gebildeten Schichten während der Fertigung der Vorform (90) mittels einer Laservorrichtung mit einem Laserstrahl oder mittels einer Heizvorrichtung (2) mit einer Verfestigungstemperatur beaufschlagt werden, die im Bereich von vorzugsweise 80°C - 200°C liegt und dass die gefertigte Vorform (90) anschliessend mittels dieser oder einer weiteren Heizvorrichtung (2, 2') der Verkohlungstemperatur ausgesetzt wird.

11. Verfahren nach einem der Ansprüche 1-10, **dadurch gekennzeichnet, dass** die nach dem Prozess der Verkohlung vorliegende Struktur (9) geschliffen und/oder beschichtet oder bemalt wird.

12. Vorrichtung zur Durchführung des Verfahrens nach einem der Ansprüche 1-11, **dadurch gekennzeichnet, dass** ein Reservoir (11) für das Prozessmaterial (9) vorgesehen ist, welches unter Druck durch eine mit einem steuerbaren Ventil (130) versehene Leitung (13) einem Substrat (18) zuführbar ist, wobei entweder das Substrat (18) und/oder die Leitung (13) innerhalb eines Koordinatensystems derart verschiebbar sind, SO dass mehrere übereinander liegende Schichten des Prozessmaterials (9) auf das Substrat (18) auftragbar sind und dass eine Heizvorrichtung (2) mit einer Heizquelle und/oder einer Mikrowellenquelle vorgesehen ist, mittels der eine Verfestigung der aufgetragenen Schichten bewirkbar ist.

13. Vorrichtung nach Anspruch 12, **dadurch gekennzeichnet, dass** das Substrat (18), das vorzugsweise von der Vorform (90) lösbar ist, innerhalb einer räumlich abschliessbaren Heizvorrichtung (2) angeordnet ist, innerhalb der die Verfestigungstemperatur und vorzugsweise auch die Verkohlungstemperatur erzeugt bar sind.

14. Struktur gefertigt nach dem Verfahren gemäss einem der Ansprüche 1-11.

15. Struktur nach Anspruch 14 in der Ausgestaltung eines Kunstgegenstandes oder eines Nutzgegenstandes, wie eines Möbelstücks, eines Bauelements, eines Werkzeugs, oder eines Teils davon.
